# EUROPEAN PATENT SPECIFICATION

(11) **EP 1 997 652 B1**
(45) Date of publication and mention of the grant of the patent: **23.12.2009**
(21) Application number: 07290687.8
(22) Date of filing: 01.06.2007
(51) Int. Cl.: B60C 15/024, B60C 15/02

(54) **Method for preventing slippage of a tire on a tire and wheel assembly, and tire and wheel assembly obtained thereby**
Verfahren zum Verhindern des Schlupfes eines Reifens auf einer Reifen-/Radanordnung und danach hergestellte Reifen-/Radanordnung
Procédé pour empêcher le glissement d'un pneu sur un ensemble pneu et roue et ensemble pneu et roue ainsi obtenu

(43) Date of publication of application: 03.12.2008
(73) Proprietor: Société de Technologie Michelin, 63000 Clermont-Ferrand (FR); Michelin Recherche et Technique S.A., 1763 Granges-Paccot (CH); The Goodyear Tire & Rubber Company, Akron, OH 44316-0001 (US)
(72) Inventor: Peyrot, André, 63100 Clermont-Ferrand (FR)
(74) Representative: Diernaz, Christian

(56) References cited:
- EP-A- 0 982 158
- WO-A-95/23073
- WO-A-2004/041557
- FR-A1- 2 879 965
- US-B1- 6 345 657
- US-B2- 6 571 846

## Description

### BACKGROUND AND SUMMARY OF THE INVENTION

The present invention relates to the general field of tires and wheel assemblies comprising tires mounted thereon. Such tires are known per se, and generally comprise a crown section with two side walls. The tires are fitted with at least one bead, and usually two beads, which are located one at each end of a respective side wall. The beads are often rigid or semi-rigid, and may comprise one or more reinforcing elements, for example a rod, or bundle of cable or assembly of wires formed into a mesh or a rod shape, in order to confer a radial reinforcement to the bead of the tire. The tires are generally fitted to a wheel assembly via a rim present in the wheel assembly. In traditional tires, the wheel rim has a bearing or seating surface for a corresponding bead that slopes inwardly towards the centre of the wheel assembly. The bead of the tire is therefore defined in such a way as to have a heel part that abuts an inner, inwardly sloping seating surface of the rim and a toe part that abuts an outer, inwardly sloping surface of the rim. The outer, inwardly sloping surface of the rim describes a circle of greater diameter than the inner, inwardly sloping surface of the rim. When the tire is inflated, the pressure therein causes the beads to seat against the rim and securely hold the tire onto the rim.

In recent years, developments in tire manufacture have introduced a new tire and wheel assembly that is different from traditional assemblies in that the heel and toe of the bead have bearing surfaces that slope away from the axial centre of the tire. Corresponding rims have been developed that mate with the heel and toe surfaces of the tire bead. These tire and wheel systems therefore have a bearing surface, whether it be on the rim, the tire, or correspondingly on both, that slopes away from the axial centre of the tire and wheel assembly, towards the outside of said tire and assembly, providing an inner, outwardly sloping, heel bearing surface that describes a circle of greater diameter than the outer, outwardly sloping toe surface. An example is described in US patent US-A-6,581,846, in particular Figure 1. In this new tire and wheel assembly the points of the bearing surface axially on the outside are on a circle the diameter of which being less than the diameter of the circle on which are the points of the same bearing surface axially to the inside (for convenience it is said that bearing surface is inclined towards the exterior, meaning towards the exterior of the tire cavity where acts the internal inflation pressure).

Under certain circumstances, particularly under high applied torque the tire of this last new tire and wheel assembly may slip relative to the rim. When slippage occurs, it can lead to undesirable effects such as loss of wheel balance, in turn leading to generation of vibrations; or excessive demands on the valve installation.

Slippage occurs when the ratio T/N, or tangential effort (T) over perpendicular effort (N), between the tire and rim, reaches what is known as the "slippage limit". Attempts to avoid slippage have already been made by modifying the slippage limit, in particular by modifying the surface of the rim seats.

The present application proposes to improve the slippage in the tire and wheel assemblies having at least one of their bearing surfaces inclined towards the exterior. Accordingly one object of the present invention is a method for preventing rotatory slippage between a tire and wheel assembly, wherein said method comprises
- determining a zone of a bead surface inclined towards the exterior and having a substantially non-evolutionary surface contact pressure between a bead surface and a rim surface; and
- increasing said surface contact pressure between said bead surface and said rim surface in said determined zone.

The solution proposed above limits the ratio of T/N, thereby avoiding the requirement of modifying or reducing the slippage limit.

The expression "contact surface pressure" when used herein and in the claims means the pressure measured or calculated at the contact surface of the tire,in this case the bead of the tire, with the rim or vice-versa.

Generally, and preferably, when located on the bead or rim surfaces, the material of the surface contact pressure increase means is the same as the rim or bead surfaces, and in such a case, it is particularly advantageous to make the means an integral part of said surfaces, for example, by providing an extra thickness of said material in said zone, for example of elastomeric material, for example tire rubber, for the bead surface, and of metallic material, for example alloy, for the rim surface. In this way, it is possible to integrate the surface contact pressure increase means without having to be concerned about fixing the former to the rim or bead surfaces. However, as mentioned above, it is also possible to provide for separate surface contact pressure means, for example, in the shape of a rod, fibres, or layer of material, that may be elastomeric or metallic, or any other suitable material leading to the same end effect, i.e. an increase in the surface contact pressure in the zone.

The invention further comprises a tire and wheel assembly, wherein the tire has a bead surface that bears on a rim surface, and the bead surface is modified by surface contact pressure increase means located in a non-evolutionary surface contact pressure zone. In accordance with this object, said non-evolutionary surface contact pressure zone can be determined by measurement or calculation, for example, using the methods outlined above.

A further aspect of the invention is a tire, comprising surface contact pressure increase means located in a non-evolutionary surface contact pressure zone of a bead surface. Preferably, the surface contact pressure increase means are situated perpendicular to an axis of a reinforcement element, and tangential to an outward-most circumference of said reinforcement element, and extend outwards towards a toe region of a bead.

It is yet another aspect of the invention to provide a wheel assembly comprising a rim surface for receiving a bead from a tire having a tire bead surface, wherein the rim surface is modified in a zone corresponding to a non-evolutionary surface contact pressure zone of a tire bead surface. Even more preferably, the modified rim surface comprises surface contact pressure increase means that are integral with the rim surface.

The above and other aspects of the invention are further described in the accompanying figures and detailed examples, given merely for the purposes of illustration of the invention.

### BRIEF DESCRIPTION OF THE FIGURES

- Figure 1 schematically represents a cross-section of part of a prior art tire and wheel system, showing in particular a bead area of the tire and part of a wheel rim;

- Figure 2 schematically represents a cross-section of part of a tire system according to the present invention, in which the outer profile of the bead seat has been modified in accordance with the method of the invention;

- Figures 3a and 3b represents a comparison of the contact surface pressures between the reference tire and wheel system (Figure 3a) and those obtained in the tire and wheel system according to the present invention (Figure 3b);

- Figure 4 represents a schematic close-up of the bead profile, and in particular that part of the bead profile that has been modified in accordance with the present invention.

### DETAILED DESCRIPTION OF PREFERRED EMBODIMENTS

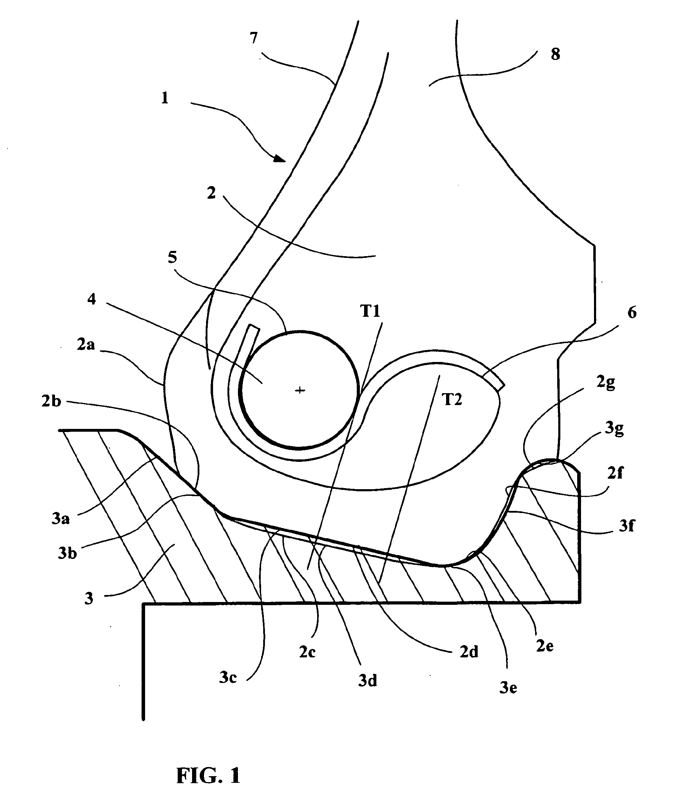

A reference tire and rim system or assembly is illustrated in cross-section in Figure 1. Such a tire system is available under the reference nomenclature 245-690 R 500A and has a wheel dimension of substantially 235 millimetres by 500 millimetres. The representation is similar in substance to Figure 1 of US patent US 6,571,846, except that the current figure is substantially a mirror image thereof, i.e. represents the opposite side of the same tire and wheel assembly. The system is represented by the general reference numeral 1. A bead 2 defining a bead surface 2a, 2b, 2c, 2d, 2e, 2f, 2g, and a rim 3 and corresponding rim surface 3a, 3b, 3c, 3d, 3e, 3f, 3g substantially contact one another. When viewed along the axis of rotation of the wheel and tire assembly, bead and rim surfaces 2b, 3b, wherein 2b represents the heel of the bead, have a greater diameter than bead and rim surfaces 2e, 3e, wherein 2e represents the toe of the bead. An outward slope, i.e. a slope that leans away from and to the exterior of the tire and wheel assembly, is thus formed between 2b, 3b and 2e, 3e. The bead 2 at 2f also abuts an upward rim projection known as a hump at 3f, and extends to also contact an upper zone 3g of the hump 3 at 2g. The slope or profile of the bead and rim between surfaces 2c, 3c and 2f, 3f is substantially constant, whereas the slope or profile of the bead and rim between surfaces 2b, 3b and 2c, 3c is preferably greater than the latter slope.

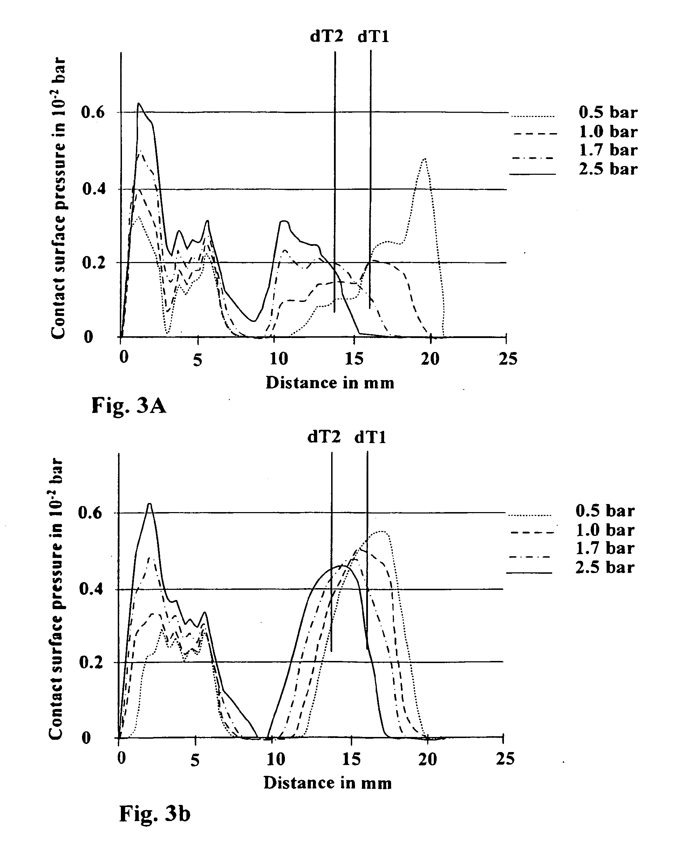

The bead of the tire also comprises one or more reinforcement elements 4, which can be rods, wires or cables, bundled or not bundled, as are well known to those skilled in the art of tire manufacture. The one or more reinforcement elements 4 define an outermost circumference 5, about which is wound a tire body reinforcement element 6 that extends upward to reinforce the side walls 7 of the tire body 8. An orthogonal or perpendicular imaginary line T1 can be drawn from said outermost circumference 5 that is tangential to the latter. The line T1 intersects the bead 2 and rim 3 surfaces at a right angle between 2c, 3c and 2d, 3d effectively delimiting these surfaces. A second imaginary line T2 can be drawn parallel to T1, which is also perpendicular to bead and rim surfaces 2 and 3, and forms the delimitation between surfaces 2d, 3d and 2e, 3e. It has been determined by calculation and experimentally that the surfaces 2d, 3d are the zones in which an increase in tire inflation pressure or mechanical forces leads to contact surface pressures between bead and rim which are substantially non-evolutionary, i.e. an increase in the tire inflation pressure or mechanical forces affecting the tire bead does not lead to any significant increased surface contact pressure, i.e. within the accuracy and statistical precision of measurement or calculation of the system under study. Such a zone can be seen in Figure 3a, between the reference lines dT2 and dT1. It is believed by the present applicants that such a zone has never before been identified and represents a significant advance in the study of tire and wheel system behaviour. The origin of the abscissae of the curves shown on the graph is taken at the first point of contact of the bead with the rim on the rim's outer edge.

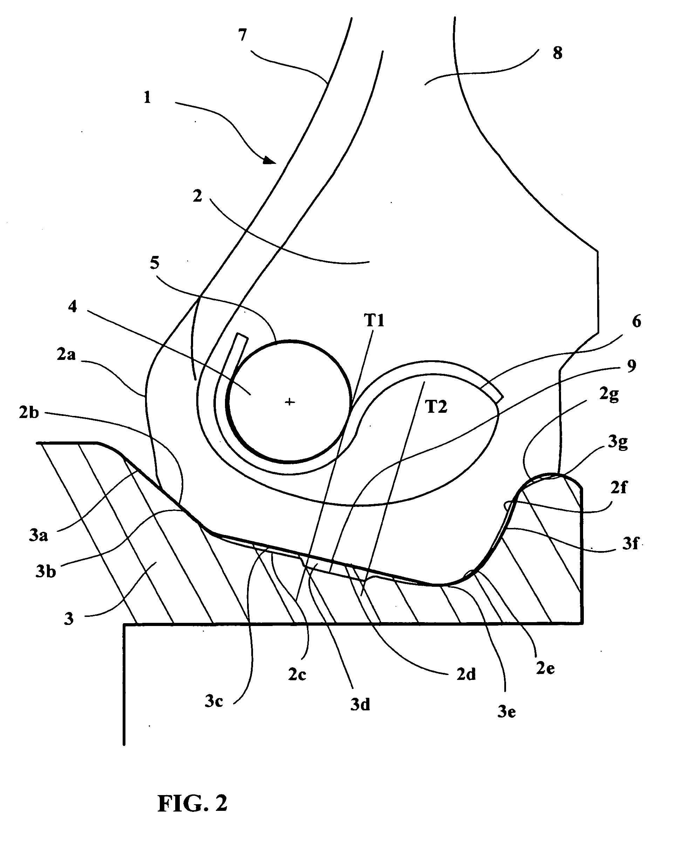

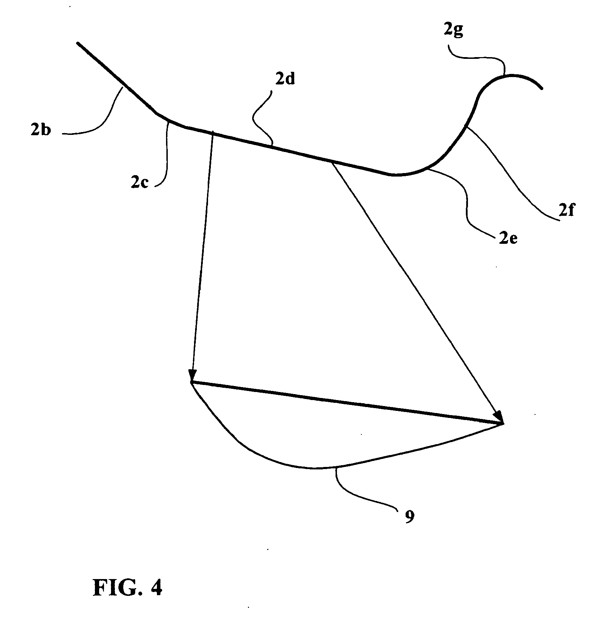

Turning now to Figure 2, and a preferred embodiment of the present 15 invention, substantially the same illustration as Figure 1 is shown, and like numerals indicate identical parts, elements and zones, except as otherwise indicated hereafter. In this embodiment, Figure 2 illustrates a modified profile 9 in contact with the rim 3 and corresponding slopes of the bead 2 at the surface 2d. This modified profile 9 is preferably curved, and even more preferably generally convex, as shown in the close-up illustration of Figure 4. The added material of the modified profile 9 is preferably formed from the same material as the bead itself, although it is perfectly possible to have integrated added material forming the curved profile that is different to that of the bead, depending on any particular desired rheological or mechanical characteristics that may be required or deemed advantageous. Additionally, the extra material comprising the curved profile 9 can be obtained by providing an insert at 2d of the bead, that is located between zones 2d and 3d, and provides sufficient friction between each of said zones. In still yet another alternative, it is possible to provide the rim with a modified profile, in a similar or corresponding or mating manner to the bead profile.

Figure 3b illustrates the change in contact surface pressure of the tire and rim assembly according to the present invention, and the preferred embodiment described above and illustrated in Figures 2 and 4. From this Figure 3b, and under the same conditions as in Figure 3a, it is clear that contact surface pressures are significantly increased in the non-evolutionary zone 2d, delimited by dT2 and dT1, and comprising the modified profile. The applicants have therefore successfully demonstrated and validated their hitherto unknown discovery of the non-evolutionary zone 2d, which in turn reduces the occurrence of slippage in a surprising manner. Moreover, it has been demonstrated as shown in Figure 3b and Figure 4 that the surface contact pressure can be substantially doubled when the profile 9 is modified by providing approximately on average 0.4 millimetres thickness of extra matter to the bead surface 2d.

## Claims

1. A method for preventing rotatory slippage between a tire and wheel assembly, said tire having bearing surfaces, at least one of these bearing surfaces being inclined towards the exterior, wherein said method comprises:
- determining a zone of a bead surface (2a-2g) inclined toward the exterior and having a substantially non-evolutionary surface contact pressure between a bead surface (2a-2g) and a rim surface (3a-3g), and
- increasing said surface contact pressure between said bead surface (2a-2g) and said rim surface (3a-3g) in said determined zone.

2. The method according to claim 1, wherein the determination step is carried out under increasing tire inflation pressure.

3. The method according to claim 1, wherein the zone is determined by measurement.

4. The method according to claim 1, wherein the zone is determined by calculation.

5. The method according to claim 1, wherein the surface contact pressure in said determined zone is increased by locating surface contact pressure increase means in said determined zone.

6. The method according to claim 5, wherein the surface contact pressure increase means are located in said zone on the rim surface (3a-3g).

7. The method according to claim 5,wherein the surface contact pressure increase means are located in said zone on the bead surface (2a-2g).

8. The method according to claim 5, wherein the surface contact pressure increase means are located in said zone between said bead surface (2a-2g) and said rim surface (3a-3g).

9. The method according to claim 1, wherein the surface contact pressure between said bead surface (2a-2g) and said rim surface (3a-3g) is increased by providing an extra thickness of bead material in said determined zone.

10. The method according to claim 1, wherein the surface contact pressure between said bead surface (2a-2g) and said rim surface (3a-3g) is increased by providing an extra thickness of rim material in said determined zone.

11. The method according to claim 1, wherein the surface contact pressure between said bead surface (2a-2g) and said rim surface (3a-3g) is increased by providing a separate layer of material between said bead surface (2a-2g) and said rim surface (3a-3g).

12. The method according to claim 1, wherein said determined zone is situated axially outside and away from a reinforcement (4); and extends outwards towards a toe region of a bead (2).

13. The method according to claim 1, wherein said determined zone is situated perpendicular to an axis of a reinforcement element (4); and tangential to an outward-most circumference of said reinforcement element (4), and extends outwards towards a toe region of a bead (2).

14. A tire and wheel assembly having bearing surfaces, at least one of these bearing surfaces being inclined towards the exterior, wherein the tire has a bead surface (2a-2g) that bears on a rim surface (3a-3g), and the bead surface (2a-2g) is modified by surface contact pressure increase means located in a non-evolutionary surface contact pressure zone.

15. The tire and wheel assembly according to claim 14, wherein said non-evolutionary surface contact pressure zone is determined by measurement or calculation.

16. The tire and wheel assembly according to claim 14, wherein said non-evolutionary surface contact pressure zone is situated axially outside and away from a reinforcement element (4), and extends outwards towards a toe region of a bead (2).

17. The tire and wheel assembly according to claim 14, wherein said non-evolutionary surface contact pressure zone is situated perpendicular to an axis of a reinforcement element (4), and tangential to an outward-most circumference of said reinforcement element (4), and extends outwards towards a toe region of a bead (2).

18. The tire and wheel assembly according to claim 14, further comprising surface contact pressure increase means which have a substantially curved profile.

19. The tire and wheel assembly according to claim 18, wherein said surface contact pressure increase means are an integral part of the bead (2).

20. A tire, comprising surface contact pressure increase means located in a non-evolutionary surface contact pressure zone of a bead surface (2a-2g).

21. The tire according to claim 20, wherein the surface contact pressure increase means are situated perpendicular to an axis of a reinforcement element (4), and tangential to an outward-most circumference of said reinforcement element (4), and extend outwards towards a toe region of a bead (2).

22. The tire according to claim 20, wherein the surface contact pressure increase means are situated axially outside and away from a reinforcement element (4), and extend outwards towards a toe region of a bead (2).

23. The tire according to claim 20, wherein the surface contact pressure increase means have a substantially curved profile.

24. The tire according to claim 20, wherein the surface contact pressure increase means are an integral part of the bead (2).

25. A wheel assembly comprising a rim surface (3a-3g) for receiving a bead (2) from a tire having a tire bead surface (2a-2g), wherein the rim surface (3a-3g) is modified in a zone corresponding to a non-evolutionary surface contact pressure zone of a tire bead surfaces (2a-2g).

26. The wheel assembly according to claim 25, wherein the modified rim surface (3a-3g) comprises surface contact pressure increase means that are integral with the rim surface (3a-3g).

## Patentansprüche

1. Verfahren zum Verhindern des Drehschlupfes zwischen einem Reifen und einer Radanordnung, wobei der Reifen Auflageflächen aufweist, wobei mindestens eine dieser Auflageflächen nach außen geneigt ist, wobei das Verfahren Folgendes umfasst:
- Bestimmen einer Zone einer Wulstfläche (2a - 2g), die nach außen geneigt ist und einen sich im Wesentlichen nicht fortentwickelnden Flächenkontaktdruck zwischen einer Wulstfläche (2a - 2g) und einer Felgenfläche (3a - 3g) aufweist, und
- Verstärken des Flächenkontaktdrucks zwischen der Wulstfläche (2a - 2g) und der Felgenfläche (3a - 3g) in der bestimmten Zone.

2. Verfahren nach Anspruch 1, wobei der Bestimmungsschritt unter Erhöhung des Reifenaufblasdrucks durchgeführt wird.

3. Verfahren nach Anspruch 1, wobei die Zone durch Messen bestimmt wird.

4. Verfahren nach Anspruch 1, wobei die Zone durch Berechnung bestimmt wird.

5. Verfahren nach Anspruch 1, wobei der Flächenkontaktdruck in der bestimmten Zone durch Anordnen von Mitteln zur Verstärkung des Flächenkontaktdrucks in der bestimmten Zone verstärkt wird.

6. Verfahren nach Anspruch 5, wobei die Mittel zur Verstärkung des Flächenkontaktdrucks an der Felgenfläche (3a - 3g) in der Zone angeordnet werden.

7. Verfahren nach Anspruch 5, wobei die Mittel zur Verstärkung des Flächenkontaktdrucks in der Zone auf der Wulstfläche (2a - 2g) angeordnet werden.

8. Verfahren nach Anspruch 5, wobei die Mittel zur Verstärkung des Flächenkontaktdrucks in der Zone zwischen der Wulstfläche (2a - 2g) und der Felgenfläche (3a - 3g) angeordnet werden.

9. Verfahren nach Anspruch 1, wobei der Flächenkontaktdruck zwischen der Wulstfläche (2a - 2g) und der Felgenfläche (3a - 3g) durch Bereitstellen einer zusätzlichen Wulstmaterialdicke in der bestimmten Zone verstärkt wird.

10. Verfahren nach Anspruch 1, wobei der Flächenkontaktdruck zwischen der Wulstfläche (2a - 2g) und der Felgenfläche (3a - 3g) durch Bereitstellen einer zusätzlichen Felgenmaterialdicke in der bestimmten Zone verstärkt wird.

11. Verfahren nach Anspruch 1, wobei der Flächenkontaktdruck zwischen der Wulstfläche (2a - 2g) und der Felgenfläche (3a - 3g) durch Bereitstellen einer getrennten Materialschicht zwischen der Wulstfläche (2a - 2g) und der Felgenfläche (3a - 3g) verstärkt wird.

12. Verfahren nach Anspruch 1, wobei sich die bestimmte Zone axial außerhalb und von einer Verstärkung (4) weg befindet und sich nach außen zu einem Zehenbereich des Wulstes (2) erstreckt.

13. Verfahren nach Anspruch 1, wobei sich die bestimmte Zone senkrecht zu einer Achse eines Verstärkungselements (4) befindet und tangential zu einem am weitesten außen liegenden Umfang des Verstärkungselements (4) und nach außen zu einem Zehenbereich eines Wulstes (2) verläuft.

14. Reifen und Radanordnung mit Auflageflächen, wobei mindestens eine dieser Auflageflächen nach außen geneigt ist, wobei der Reifen eine Wulstfläche (2a - 2g) aufweist, die an einer Felgenfläche (3a - 3g) anliegt, und die Wulstfläche (2a - 2g) durch Mittel zur Verstärkung des Flächenkontaktdrucks, die sich in einer sich nicht fortentwickelnden Flächenkontaktdruckzone befinden, geändert wird.

15. Reifen und Radanordnung nach Anspruch 14, wobei die sich nicht fortentwickelnde Flächenkontaktdruckzone durch Messung oder Berechnung bestimmt wird.

16. Reifen und Radanordnung nach Anspruch 14, wobei sich die sich nicht fortentwickelnde Flächenkontaktdruckzone axial außerhalb eines Verstärkungselements (4) und davon weg befindet und sich nach außen zu einem Zehenbereich eines Wulstes (2) erstreckt.

17. Reifen und Radanordnung nach Anspruch 14, wobei sich die sich nicht fortentwickelnde Flächenkontaktdruckzone senkrecht zu einer Achse eines Verstärkungselements (4) erstreckt und tangential zu einem am weitesten außen liegenden Umfang des Verstärkungselements (4) und nach außen zu einem Zehenbereich eines Wulstes (2) verläuft.

18. Reifen und Radanordnung nach Anspruch 14, die weiterhin Mittel zur Verstärkung des Flächenkontaktdrucks umfasst, die ein im Wesentlichen gekrümmtes Profil aufweisen.

19. Reifen und Radanordnung nach Anspruch 18, wobei die Mittel zur Verstärkung des Flächenkontaktdrucks ein integraler Teil des Wulstes (2) sind.

20. Reifen mit Mitteln zur Verstärkung des Flächenkontaktdrucks, die sich in einer sich nicht fortentwickelnden Flächenkontaktdruckzone einer Wulstfläche (2a - 2g) befinden.

21. Reifen nach Anspruch 20, wobei sich die Mittel zur Verstärkung des Flächenkontaktdrucks senkrecht zu einer Achse eines Verstärkungselements (4) befinden und tangential zu einem am weitesten außen liegenden Umfang des Verstärkungselements (4) und nach außen zu einem Zehenbereich eines Wulstes (2) verlaufen.

22. Reifen nach Anspruch 20, wobei sich die Mittel zur Verstärkung des Flächenkontaktdrucks außerhalb eines Verstärkungselements (4) und davon weg befinden und sich nach außen zu einem Zehenbereich eines Wulstes (2) erstrecken.

23. Reifen nach Anspruch 20, wobei die Mittel zur Verstärkung des Flächenkontaktdrucks ein im Wesentlichen gekrümmtes Profil aufweisen.

24. Reifen nach Anspruch 20, wobei die Mittel zur Verstärkung des Flächenkontaktdrucks ein integraler Teil des Wulstes (2) sind.

25. Radanordnung, die eine Felgenfläche (3a - 3g) zur Aufnahme eines Wulstes (2) von einem Reifen mit einer Reifenwulstfläche (2a - 2g) umfasst, wobei die Felgenfläche (3a - 3g) in einer Zone, die einer sich nicht fortentwickelnden Flächenkontaktdruckzone einer Reifenwulstfläche (2a - 2g) entspricht, geändert wird.

26. Reifen nach Anspruch 25, wobei die geänderte Felgenfläche (3a - 3g) Mittel zur Verstärkung des Flächenkontaktdrucks umfasst, die integral mit der Felgenfläche (3a - 3g) sind.

## Revendications

1. Procédé pour empêcher le glissement rotatif entre un bandage et un ensemble de roue, ledit bandage présentant des surfaces d'appui, au moins l'une de ces surfaces d'appui étant inclinée vers l'extérieur, ledit procédé comprenant les étapes qui consistent à :
- déterminer une zone d'une surface de bourrelet (2a-2g) inclinée vers l'extérieur et présentant une pression de contact de surface uniforme entre une surface de bourrelet (2a-2g) et une surface de bordure de jante (3a-3g) et
- augmenter ladite pression de contact de surface entre ladite surface de bourrelet (2a-2g) et ladite surface de bordure de jante (3a-3g) dans ladite zone déterminée.

2. Procédé selon la revendication 1, dans lequel l'étape de détermination est conduite en augmentant la pression de gonflement du bandage.

3. Procédé selon la revendication 1, dans lequel la zone est déterminée par mesure.

4. Procédé selon la revendication 1, dans lequel la zone est déterminée par calcul.

5. Procédé selon la revendication 1, dans lequel la pression de contact de surface dans ladite zone déterminée est augmentée en plaçant des moyens d'augmentation de la pression de contact de surface dans ladite zone déterminée.

6. Procédé selon la revendication 5, dans lequel les moyens d'augmentation de la pression de contact des surfaces sont situés dans ladite zone de la surface de bordure de jante (3a-3g).

7. Procédé selon la revendication 5, dans lequel les moyens d'augmentation de la pression de contact des surfaces sont situés dans ladite zone sur la surface de bourrelet (2a-2g).

8. Procédé selon la revendication 5, dans lequel les moyens d'augmentation de la pression de contact de surface sont situés dans ladite zone entre ladite surface de bourrelet (2a-2g) et ladite surface de bordure de jante (3a-3g).

9. Procédé selon la revendication 1, dans lequel la pression de contact de surface entre ladite surface de bourrelet (2a-2g) et ladite surface de bordure de jante (3a-3g) est augmentée en prévoyant une épaisseur supplémentaire de matériau de bourrelet dans ladite zone déterminée.

10. Procédé selon la revendication 1, dans lequel la pression de contact de surface entre ladite surface de bourrelet (2a-2g) et ladite surface de bordure de jante (3a-3g) est augmentée en prévoyant une épaisseur supplémentaire de matériau de bordure de jante dans ladite zone déterminée.

11. Procédé selon la revendication 1, dans lequel la pression de contact de surface entre ladite surface de bourrelet (2a-2g) et ladite surface de bordure de jante (3a-3g) est augmentée en prévoyant une couche séparée de matériau entre ladite surface de bourrelet (2a-2g) et ladite surface de bordure de jante (3a-3g).

12. Procédé selon la revendication 1, dans lequel ladite zone déterminée est située axialement à l'extérieur et à distance d'un renfort (4) et s'étend vers l'extérieur en direction d'une région de sommet d'un bourrelet (2).

13. Procédé selon la revendication 1, dans lequel ladite zone déterminée est perpendiculaire à un axe d'un élément de renfort (4), est tangentielle à une circonférence extérieure dudit élément de renfort (4) et s'étend vers l'extérieur en direction d'une région de sommet d'un bourrelet (2).

14. Ensemble de bandage et de roue présentant des surfaces d'appui, au moins l'une des ces surfaces d'appui étant inclinée vers l'extérieur, le bandage présentant une surface de bourrelet (2a-2g) qui s'appuie sur une surface de bordure de jante (3a-3g), la surface de bourrelet (2a-2g) étant modifiée par des moyens d'augmentation de la pression de contact de surface situés dans une zone de pression de contact de surface uniforme.

15. Ensemble de bandage et de roue selon la revendication 14, dans lequel ladite zone de pression de contact de surface uniforme est déterminée par mesure ou calcul.

16. Ensemble de bandage et de roue selon la revendication 14, dans lequel ladite zone de pression de surface de contact uniforme est située axialement à l'extérieur et à distance d'un élément de renfort (4) et s'étend vers l'extérieur en direction d'une région de sommet d'un bourrelet (2).

17. Ensemble de bandage et de roue selon la revendication 14, dans lequel la zone de pression de contact de surface uniforme est perpendiculaire à un axe d'un élément de renfort (4), est tangentielle à une circonférence extérieure dudit élément de renfort (4) et s'étend vers l'extérieur en direction d'une région de sommet d'un bourrelet (2).

18. Ensemble de bandage et de roue selon la revendication 14, comprenant en outre des moyens d'augmentation de la pression de contact de surface qui présentent un profil essentiellement incurvé.

19. Ensemble de bandage et de roue selon la revendication 18, dans lequel lesdits moyens d'augmentation de la pression de contact de surface font partie intégrante du bourrelet (2).

20. Bandage comprenant des moyens d'augmentation de la pression de contact de surface situés dans une zone de pression de contact de surface uniforme d'une surface de bourrelet (2a-2g).

21. Bandage selon la revendication 20, dans lequel les moyens d'augmentation de la pression de contact de surface sont perpendiculaires à un axe d'un élément de renfort (4), sont tangentiels à une circonférence extérieure dudit élément de renfort (4) et s'étendent vers l'extérieur en direction d'une région de sommet d'un bourrelet (2).

22. Bandage selon la revendication 20, dans lequel les moyens d'augmentation de pression de contact de surface sont situés axialement à l'extérieur et à distance d'un élément de renfort (4) et s'étendent vers l'extérieur en direction d'une région de sommet d'un bourrelet (2).

23. Bandage selon la revendication 20, dans lequel les moyens d'augmentation de la pression de contact de surface ont un profil essentiellement incurvé.

24. Bandage selon la revendication 20, dans lequel les moyens d'augmentation de la pression de contact de surface font partie intégrante du bourrelet (2).

25. Ensemble de roue comprenant une surface de bordure de jante (3a-3g) destinée à recevoir un bourrelet (2) d'un bandage qui présente une surface de bourrelet de bandage (2a-2g), la surface de bordure de jante (3a-3g) étant modifiée dans une zone qui correspond à une zone de pression de contact de surface uniforme d'une surface de bourrelet de bandage (2a-2g).

26. Ensemble de roue selon la revendication 25, dans lequel la surface de bordure de jante modifiée (3a-3g) comprend des moyens d'augmentation de la pression de contact de surface qui font partie intégrante de la surface de bordure de jante (3a-3g).
